# EUROPEAN PATENT APPLICATION

(11) **EP 4 331 691 A1**
(43) Date of publication of application: **06.03.2024**
(21) Application number: 22795421.1
(22) Date of filing: 25.03.2022
(51) Int. Cl.: A63B 69/00, A63B 71/06, G06T 7/00, G06T 7/20

(54) **MOVEMENT IMPROVEMENT DEVICE, MOVEMENT IMPROVEMENT METHOD, MOVEMENT IMPROVEMENT PROGRAM, AND MOVEMENT IMPROVEMENT SYSTEM**

(30) Priority: 28.04.2021 JP 2021076128
(71) Applicant: OMRON Corporation, Kyoto-shi, Kyoto 600-8530 (JP)
(72) Inventor: NISHIDA, Kazuki, Kyoto-shi, Kyoto 600-8530 (JP)
(74) Representative: Appelt, Christian W.
(86) International application number: PCT/JP2022/014584
(87) International publication number: WO 2022/230504

(57) **Abstract**

A motion improvement device presents an improvement to a motion based on a motion of a user in a play. The device includes a trained model (19b) trained so as to take time-series information about a specific motion as input and to take result information about a result caused by the motion as output, a receiver (12) that receives target time-series information about a target motion, a generator (13) that generates, based on the received target time-series information, movement data with a higher degree of achievement for a predetermined purpose than a result estimated by inputting the target time-series information into the trained model (19b), and an output unit (14) that outputs information for improving the target motion based on the generated movement data.

## Description

### FIELD

The present invention relates to a motion improvement device, a motion improvement method, a motion improvement program, and a motion improvement system.

### BACKGROUND

At training sites for various sports or at production sites such as factories, the skill of a player or the skill level of a worker is assessed by analyzing the motion of the player or the worker, and the assessment result is provided as feedback to the player or the worker to be used to improve their skills or skill levels. Patent Literature 1 describes a learning system that improves the skill levels in, for example, sports.

The learning system obtains a reference motion defined based on the motions of multiple skilled persons from a server, and displays the obtained reference motion adjacent to the motion of a user or superimposes the obtained reference motion on the motion of the user to allow the user to learn the manner of moving the body of the user by referring to the reference motion as a model. The reference motion compared with the motion of the user is created by averaging data about the motions of the multiple skilled persons and is prepared for each attribute such as the gender, age, weight, or height. This allows the user to select and learn the reference motion for the attribute of the user.

### CITATION LIST

### PATENT LITERATURE

Patent Literature 1: Japanese Unexamined Patent Application Publication No. 2017-64095

### SUMMARY

### TECHNICAL PROBLEM

A person who is, for example, playing a sport and has performed unsuccessfully may have no idea about the cause of the unsuccessful play. Further, the details of the improvement to the play may vary depending on the situation of the play or the motion of the player. Thus, the player may not easily identify the details of the improvement in the same manner. For example, in playing table tennis, the details of the improvement differ between when the player fails to hit back a ball directed toward the player and when the player fails to hit back a ball directed away from the player.

The learning system described in Patent Literature 1 creates a reference motion for a target motion by averaging data about the motions of multiple skilled persons, and thus may not easily allow preparation of reference motions for various situations or various types of motions of the user during the play. The learning system is thus to be improved.

One or more aspects of the present invention are directed to a motion improvement device, a motion improvement method, a motion improvement program, and a motion improvement system for presenting an improvement to a motion based on a motion of a user in a play.

### SOLUTION TO PROBLEM

A motion improvement device according to one aspect of the present disclosure includes a trained model trained so as to take time-series information about a specific motion as input and to take result information about a result caused by the motion as output, a receiver that receives target time-series information about a target motion, a generator that generates, based on the received target time-series information, movement data with a higher degree of achievement for a predetermined purpose than a result estimated by inputting the target time-series information into the trained model, and an output unit that outputs information for improving the target motion based on the generated movement data.

According to this aspect, based on the result information estimated by inputting the time-series information about the target motion into the trained model, the movement data with the higher degree of achievement of the predetermined purpose than the result indicated by the result information can be generated from the target motion data, and the information for improving the target motion can be output based on the generated movement data.

In the above aspect, the generator may calculate the movement data from the target time-series information based on an optimization algorithm to minimize a deviation between the predetermined purpose and the result estimated by inputting the target time-series information into the trained model.

According to this aspect, the movement data indicating a motion that achieves the predetermined purpose with a higher degree than the target motion based on the optimization algorithm can be generated and presented, when calculating the movement data based on the target time-series information.

In the above aspect, the optimization algorithm may be a gradient descent method.

According to this aspect, it is possible to improve the accuracy of minimizing the deviation from the predetermined purpose using the gradient descent algorithm.

In the above aspect, the time-series information may be skeletal data, and the movement data may be skeletal data.

According to this aspect, the motion for improving the target motion can be objectively recognized by referring to the skeletal data in performing the target motion.

A motion improvement method according to another aspect of the present disclosure is executed by a processor. The method includes training a model so as to take time-series information about a specific motion as input and to take result information about a result caused by the motion as output so that a trained model is created, receiving target time-series information about a target motion, generating, based on the received target time-series information, movement data with a higher degree of achievement for a predetermined purpose than a result estimated by inputting the target time-series information into the trained model, and outputting information for improving the target motion based on the generated movement data.

According to this aspect, based on the result information estimated by inputting the time-series information about the target motion into the trained model, the movement data with the higher degree of achievement of the predetermined purpose than for the result indicated by the result information can be generated from the target motion data, and the information for improving the target motion can be output based on the generated movement data.

A motion improvement program according to another aspect of the present disclosure causes a computer to function as a trained model trained so as to take time-series information about a specific motion as input and to take result information about a result caused by the motion as output, a receiver that receives target time-series information about a target motion, a generator that generates, based on the received target time-series information, movement data with a higher degree of achievement for a predetermined purpose than a result estimated by inputting the target time-series information into the trained model, and an output unit that outputs information for improving the target motion based on the generated movement data.

According to this aspect, based on the result information estimated by inputting the time-series information about the target motion into the trained model, the movement data with the higher degree of achievement of the predetermined purpose than for the result indicated by the result information can be generated from the target motion data, and the information for improving the target motion can be output based on the generated movement data.

A motion improvement system according to another aspect of the present disclosure includes a sensor terminal and a motion improvement device. The sensor terminal includes a detector that detects a specific motion and output time-series information about the motion, and a transmitter that transmits the output time-series information as target time-series information about a target motion. The motion improvement device includes a trained model trained so as to take the time-series information as input and to take result information about a result caused by the motion as output, a receiver that receives the target time-series information, a generator that generates, based on the received target time-series information, movement data with a higher degree of achievement for a predetermined purpose than a result estimated by inputting the target time-series information into the trained model, and an output unit that outputs information for improving the target motion based on the generated movement data.

According to this aspect, based on the result information estimated by inputting the time-series information about the target motion into the trained model, the movement data with the higher degree of achievement of the predetermined purpose than for the result indicated by the result information can be generated from the target motion data, and the information for improving the target motion can be output based on the generated movement data.

### ADVANTAGEOUS EFFECTS

The motion improvement device, the motion improvement method, the motion improvement program, and the motion improvement system according to the above aspects of the present invention can present an improvement to a motion based on a motion of a user in a play.

### BRIEF DESCRIPTION OF THE DRAWINGS

FIG. 1 is a diagram of a motion improvement system according to an embodiment of the present invention.
FIG. 2 is a diagram of an example screen for inputting result information.
FIG. 3 is a diagram describing a concept for calculating movement data based on target motion data.
FIG. 4 is a diagram of an example image appearing on a display in a sensor terminal based on the movement data.
FIG. 5 is a diagram of an example image appearing on the display in the sensor terminal based on the movement data.
FIG. 6 is a block diagram of a motion improvement device according to the embodiment, showing its hardware configuration.
FIG. 7 is a flowchart of a process for storing training data performed by the motion improvement device according to the embodiment.
FIG. 8 is a flowchart of a model training process performed by the motion improvement device according to the embodiment.
FIG. 9 is a flowchart of a motion improvement process performed by the motion improvement device according to the embodiment.

### DETAILED DESCRIPTION

One or more embodiments of the present invention (hereafter, the present embodiment) will now be described with reference to the drawings. In the figures, the components with the same reference numerals have the same or similar structures.

### 1. Example Use

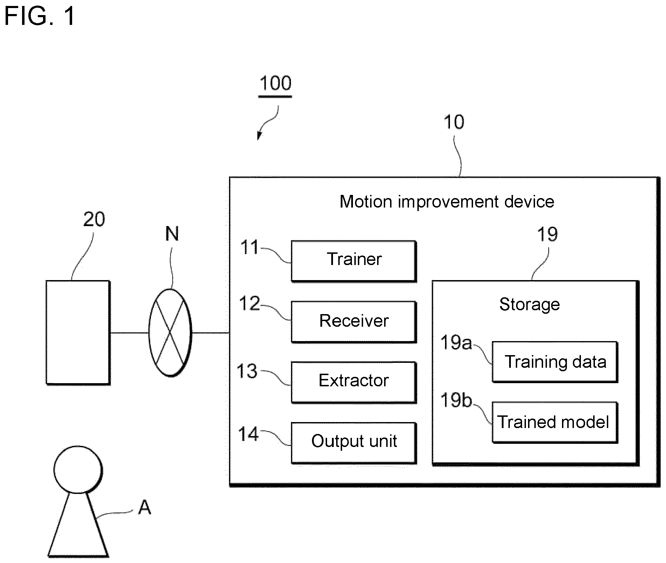

An example use of the structure according to one embodiment of the present invention will now be described with reference to FIG. 1. A motion improvement system 100 according to the present embodiment includes a sensor terminal 20, such as a smartphone, that captures an image of a motion of a user A with a camera and transmits, to a motion improvement device 10, motion data (example of time series information) extracted from the captured image as a target motion to be analyzed. The motion improvement device 10 generates movement data with the degree of achievement of a predetermined purpose higher than for a result estimated based on the target motion to be analyzed input into a trained model 19b, and outputs information for improving the target motion to be analyzed to the sensor terminal 20 based on the movement data.

The motion of the user A is, for example, throwing a dart. The estimated result is, for example, an area hit by the dart or whether the dart has hit a specific area. The predetermined purpose is, for example, to cause the dart to hit the center of the dartboard or to cause the dart to hit the specific area on the dartboard.

The trained model 19b is an artificial intelligence (AI) model trained so as to take the motion data indicating a motion of a user as input and so as to take result information indicating a result caused by the motion of the user as output. For example, the trained model 19b may take the motion data indicating the motion of throwing the dart as input and take the result information indicating whether the dart has hit the center of the dartboard as output.

The closer the accuracy is to 100%, the better the trained model 19b is. When the trained model 19b has lower accuracy, the optimized result estimated by an AI model may not actually be optimal. The trained model 19b will be described in detail later.

The motion improvement device 10 described above can present an improvement to a target motion based on the motion of the user in the play.

### 2. Example Structure

### Functional Components

The functional components of the motion improvement system 100 according to the present embodiment will now be described with reference to FIG. 1. The motion improvement system 100 includes the sensor terminal 20 and the motion improvement device 10. The sensor terminal 20 and the motion improvement device 10 are connected to each other with a communication network N.

### Sensor Terminal 20

The sensor terminal 20 is, for example, a smartphone with a camera. The sensor terminal 20 captures, with the camera, an image of a scene of the user A performing a motion, extracts motion data from the captured image, and transmits the motion data to the motion improvement device 10.

The motion data includes, for example, skeletal data indicating the motion of the skeleton of the user, coordinate value data indicating the motion of the user, and sensor data indicating the motion of the user. However, any time series information indicating the motion of the user may be transmitted to the motion improvement device 10, not limited to the motion data. Such time series information includes a video of the motion of the user in addition to the motion data.

The skeletal data may be detected by, for example, a skeletal detection application installed on a smartphone. The coordinate value data may be obtained through, for example, measurement performed by a motion capturer in place of the sensor terminal 20. The sensor data may be obtained through, for example, measurement performed by an acceleration sensor or a gyro sensor in place of the sensor terminal 20. The acceleration sensor or the gyro sensor may be preferably worn on the user. The video may be captured with, for example, the camera in the smartphone. The motion improvement device 10 receiving the video may detect the motion data such as the skeletal data.

In the present embodiment, the skeletal data is used as example motion data.

The sensor terminal 20 includes, as its functional components, a detector, an input receiver, and a transmitter. The detector detects the motion of the user A and outputs the motion data indicating the motion of the skeleton of the user A.

The input receiver receives input of the result information about the result from the motion of the user A. The input receiver receives the input of the result information in a stage of training the AI model, and it is not necessary to receive the input of the result information in a stage of analyzing the target motion.

The transmitter transmits, to the motion improvement device 10, the motion data output from the detector and the result information received by the input receiver. The motion data is transmitted to the motion improvement device 10 as the motion data about the target motion to be analyzed (hereafter referred to as target motion data).

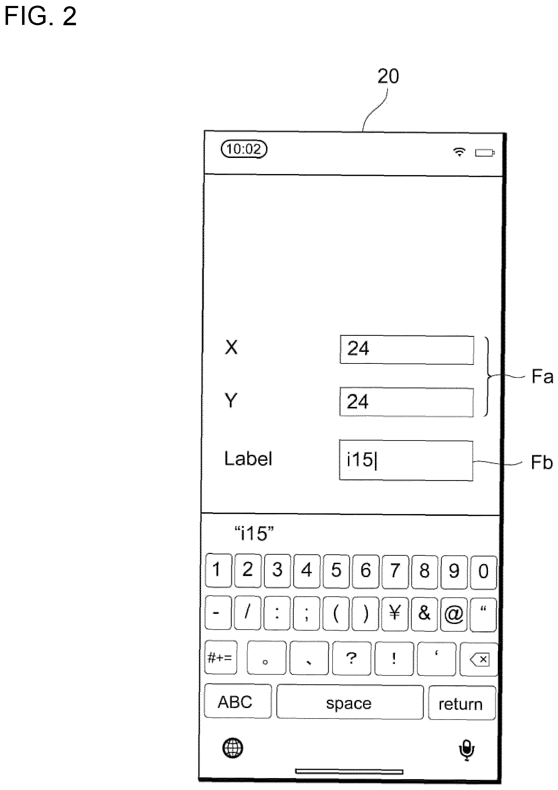

FIG. 2 shows an example screen for inputting the result information in the training stage. The screen in the figure is a screen for inputting the result of throwing a dart toward a dartboard. The sensor terminal 20 includes a display showing a field Fa for inputting the coordinates of an area hit by the dart and a field Fb for inputting a label ID for identifying the result from throwing the dart.

The coordinates may be, for example, XY coordinates having the origin at the center of the dartboard. The label ID may be set as appropriate for each result from throwing the dart. The label may be set to indicate, for example, an area hit by the dart or whether the dart has hit a specific area on the dartboard.

### Motion Improvement Device 10

The motion improvement device 10 shown in FIG. 1 includes, as its functional components, a trainer 11, a receiver 12, a generator 13, an output unit 14, and a storage 19. The storage 19 stores, for example, training data 19a and the trained model 19b. Each functional component will be described below.

### Training Data 19a

The training data 19a includes motion data as the time series information about a specific motion and result information indicating a result caused by the specific motion. The motion data is stored in a manner associated with the result information.

Examples of the specific motion include throwing a dart, hitting back a table tennis ball, and putting a golf ball.

The result caused by the above specific motion may be set, for example, for each type of motion as described below. For the motion of throwing a dart, the result may be set as, for example, the area hit by the dart or may be set as information indicating whether the dart has hit the specific area. For the motion of hitting back a table tennis ball, the result may be set as, for example, the area on the table-tennis table reached by the ball or may be set as information indicating whether the ball has reached a specific area on the table-tennis table. For the motion of putting a golf ball, the result may be set as, for example, the area in which the golf ball has stopped or may be set as information indicating whether the golf ball has been putted into the cup.

In the training stage, the user inputs, after performing the specific motion, the result caused by the specific motion into the sensor terminal 20. The input result information is transmitted to the motion improvement device 10.

### Trained Model 19b

The trained model 19b is an AI model trained using the training data 19a and is created by the trainer 11 described below.

### Trainer 11

The trainer 11 trains an AI model so as to the motion data of the training data 19a as input and to take the result information about the training data 19a as output, so that the trained model 19b is created. The AI model may be trained using, for example, graph convolutional network (GCN) or spatial temporal GCN (ST-GCN).

When, for example, the motion data indicating the motion of throwing a dart is input into the trained model 19b, the trained model 19b outputs result information indicating whether the dart has hit the center of the dartboard.

### Receiver 12

The receiver 12 receives the target motion data and the result information from the sensor terminal 20. The result information is information received in the training stage.

### Generator 13

The generator 13 generates, based on the target motion data received by the receiver 12, the movement data with the higher degree of achievement of the predetermined purpose than the result estimated by inputting the target motion data into the trained model 19b.

The estimated result described above is, for example, the result having the highest probability of multiple set results, each of which is estimated as the result from the corresponding motion. More specifically, the result from throwing the dart will be described using example results set as the dart hitting the center of the dartboard and the dart not hitting the center of the dartboard.

When, for example, the estimated results from throwing the dart include the dart hitting the center of the dartboard having the probability of 40% and the dart not hitting the center of the dartboard having the probability of 60%, the trained model 19b outputs, as the result from throwing the dart, the dart not hitting the center of the dartboard with the highest probability.

The predetermined purpose may be set for, for example, each type of motion as described below. For the motion of throwing a dart, the predetermined purpose may be, for example, to cause the dart to hit the center of the dartboard or to cause the dart to hit the specific area on the dartboard. For the motion of hitting back a table tennis ball, the predetermined purpose may be, for example, to cause the ball to reach the specific area on the table-tennis table. For the motion of putting a golf ball, the predetermined purpose may be, for example, to putt the golf ball into the cup.

When, for example, the predetermined purpose is to cause the dart to hit the center of the dartboard, and the estimated result is the dart not hitting the center of the dartboard, the generator 13 generates the movement data with the higher degree of achievement in causing the dart to hit the center of the dartboard than in the target motion data indicating the target motion in the play performed by the user. The movement data may be skeletal data or data for generating the skeletal data.

The generator 13 generates the movement data using the target motion data about the play performed by the user as a start. In other words, the generator 13 generates, from the motion data about the user's failure, the movement data improved toward a success (to achieve the predetermined purpose). Thus, an improvement to a motion can be presented based on the motion of the user in the play. More specifically, the generator 13 generates the movement data as described below.

The generator 13 calculates the movement data from the target motion data based on an optimization algorithm to minimize a deviation function indicating a gap between the result estimated based on the target motion data input into the trained model 19b and the predetermined purpose.

The optimization algorithm may be, for example, an algorithm for minimizing function values, such as gradient descent method, steepest descent method, stochastic gradient descent method, mini-batch gradient descent method, adaptive gradient (AdaGrad), root mean square propagation (RMSProp), Adadelta, or Adam. The optimization algorithm may be preferably the gradient descent method, or more preferably, the steepest descent method in the gradient descent method.

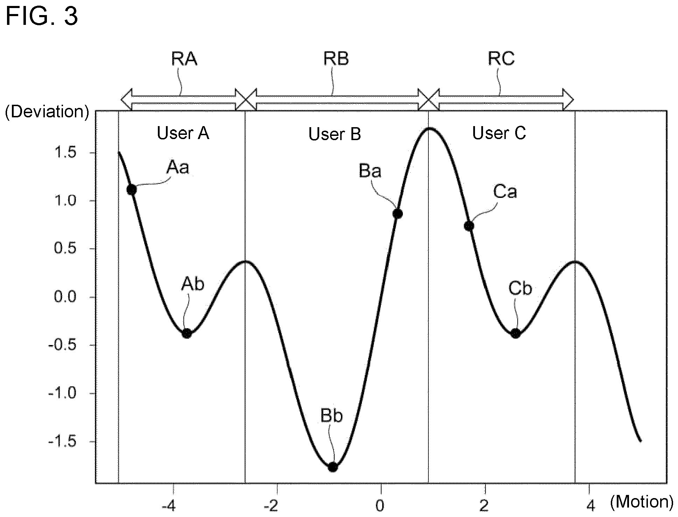

A concept in calculating the movement data from the target motion data based on the steepest descent method will now be described with reference to FIG. 3. The figure is a conceptual diagram in which the horizontal axis indicates the motion of the user and the vertical axis indicates the deviation between the motion of the user and the predetermined purpose.

In the example below described with reference to the conceptual diagram, a range (RA) of implementable motions of a user A, a range (RB) of implementable motions of a user B, and a range (RC) of implementable motions of a user C differ from one another. The trained model 19b has actually learned all the motion data corresponding to the motions of various users.

A point Aa indicates the result estimated by inputting the target motion data for the user A into the trained model 19b. A point Ba indicates the result estimated by inputting the target motion data for the user B into the trained model 19b. A point Ca indicates the result estimated by inputting the target motion data for the user C into the trained model 19b. When each of the points Aa, Ba, and Ca is optimized to minimize the deviation based on the steepest descent method, each of points Ab, Bb, and Cb is calculated as the corresponding movement data. Each of the calculated points Ab, Bb, and Cb corresponds to the minimum value for the deviation between the implementable motion corresponding to the user and the predetermined purpose.

Thus, the result estimated based on target motion data for each user is optimized using the local solution created by the trained motion of the corresponding user. This allows the optimal solution (improvement to a motion) for the motion of each user to be calculated effectively.

### Output Unit 14

The output unit 14 outputs information for improving the target motion to be analyzed based on the movement data generated by the generator 13.

Based on the information for improving the target motion to be analyzed output from the output unit 14, the sensor terminal 20 displays the skeletal data superimposed on the motion of the user captured with the camera. This will be described in detail below.

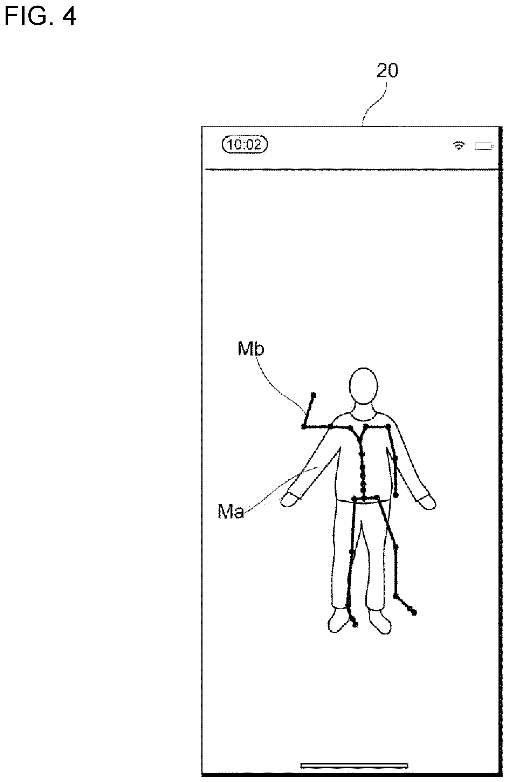

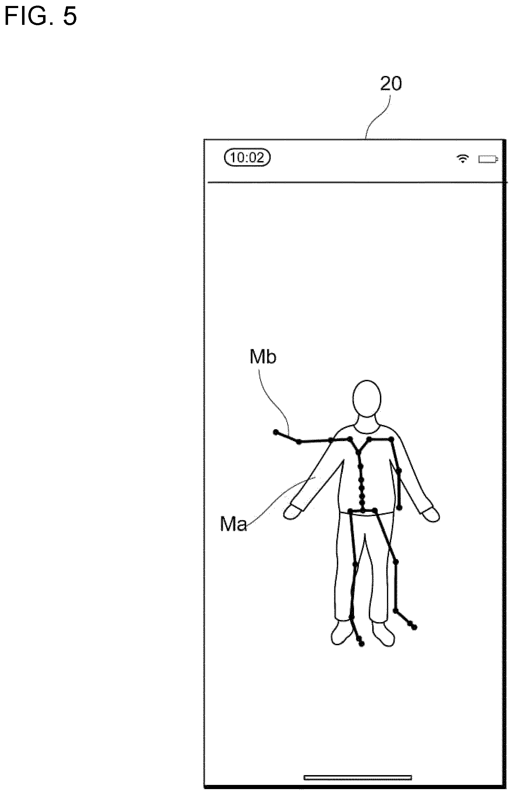

As shown in FIGs. 4 and 5, skeletal data Mb based on the information for improving the target motion to be analyzed appears on the display in the sensor terminal 20. The skeletal data Mb is superimposed on an image Ma of the user who repeatedly throws a dart.

In the skeletal data Mb superimposed on the image Ma of the user in FIG. 4, the right elbow is bent while the right hand is holding the dart. In the skeletal data Mb superimposed on the image Ma of the user in FIG. 5, the right elbow is stretched out after throwing the dart.

These images allow the user to objectively identify an improvement to the motion of the user throwing the dart.

The skeletal data based on the information for improving the target motion to be analyzed may appear around the image of the user, not limited to being superimposed on the motion of the user. The skeletal data is not limited to be displayed in synchronization with the motion of the user captured with the camera. For example, the video used to extract the motion data may be stored and the skeletal data may then be displayed in synchronization with the motion of the user in the video when the video is played.

### Hardware Configuration

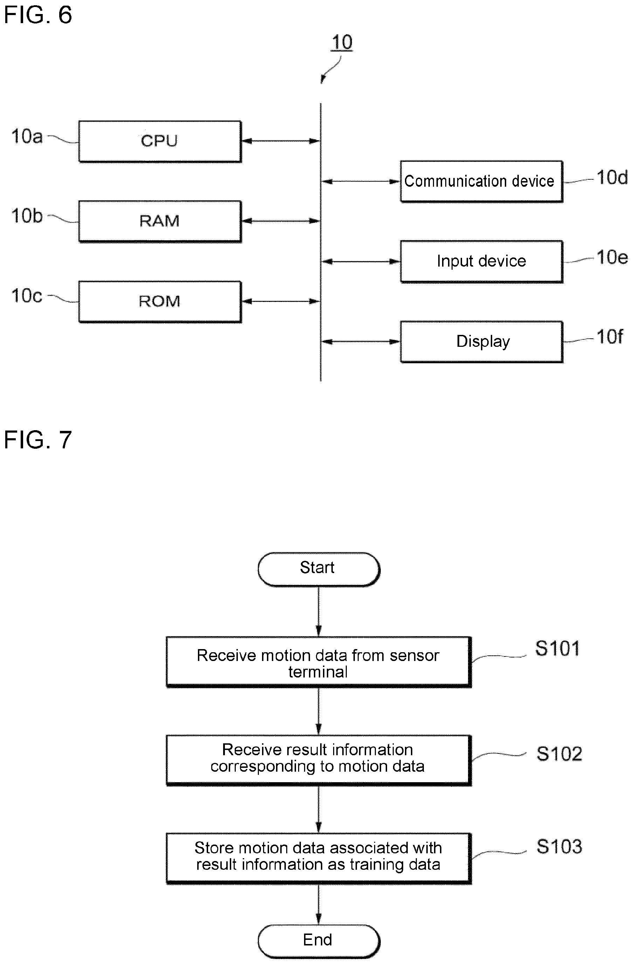

The hardware configuration of the motion improvement device 10 according to the present embodiment will now be described with reference to FIG. 6. The motion improvement device 10 includes a central processing unit (CPU) 10a corresponding to an arithmetic unit, a random-access memory (RAM) 10b corresponding to the storage 19, a read-only memory (ROM) 10c corresponding to the storage 19, a communication device 10d, an input device 10e corresponding to the receiver 12, and an output device 10f corresponding to the output unit 14. These components are interconnected with a bus to allow data communication between them. Although the motion analysis device 10 is implemented with a single computer in the present embodiment, the motion analysis device 10 may be implement with multiple computers.

The CPU 10a functions as a controller that executes programs stored in the RAM 10b or the ROM 10c and performs calculations and processing associated with data. The CPU 10a receives various items of input data from the input device 10e and the communication device 10d, and outputs the results from calculations using the input data from the output device 10f or stores the results into the RAM 10b or the ROM 10c. The CPU 10a in the present embodiment executes a program (motion improvement program) that generates the movement data with the higher degree of achievement of the predetermined purpose than the result estimated from the motion in the motion data and outputs the information for improving the motion. The arithmetic unit may be another processor such as a graphics processing unit (GPU), rather than a CPU.

The RAM 10b is, for example, a semiconductor memory that stores data in a rewritable manner. The ROM 10c is, for example, a semiconductor memory that stores data in a readable and non-rewritable manner.

The communication device 10d is an interface that connects the motion improvement device 10 to external devices. The communication device 10d is connected to the sensor terminal 20 through, for example, a communication network such as a local area network (LAN) or the Internet, and receives the motion data from the sensor terminal 20.

The input device 10e is an interface for receiving input of data from the user, and may include, for example, a keyboard, a mouse, and a touchscreen.

The output device 10f is an interface for outputting, for example, the results from calculations performed by the CPU 10a. The output device 10f may be a visual display interface. In this case, the output device 10f may include, for example, a liquid crystal display (LCD).

The motion improvement program may be stored in a computer-readable storage medium, such as the RAM 10b or the ROM 10c, to be provided. The motion improvement program may be provided through a communication network connected with the communication device 10d. The motion improvement device 10 may implement the operations of the trainer 11, the receiver 12, the generator 13, and the output unit 14 shown in FIG. 1 using the CPU 10a executing the motion improvement program. The physical structure described above is an example and may not be independent. For example, the motion improvement device 10 may include a large-scale integration (LSI) circuit incorporating the CPU 10a, the RAM 10b, and the ROM 10c.

### 3. Operation Example

An example process for storing the training data performed by the motion improvement device 10 according to the present embodiment will be described with reference to FIG. 7.

The receiver 12 in the motion improvement device 10 first receives the motion data about the specific motion from the sensor terminal 20 (step S101).

The receiver 12 in the motion improvement device 10 then receives, from the sensor terminal 20, the result information corresponding to the motion data received in step S101 (step S102).

Subsequently, the storage 19 in the motion improvement device 10 stores, as the training data 19a, the motion data received in step S101 in a manner associated with the result information received in step S102 (step S103). This ends the process for storing training data.

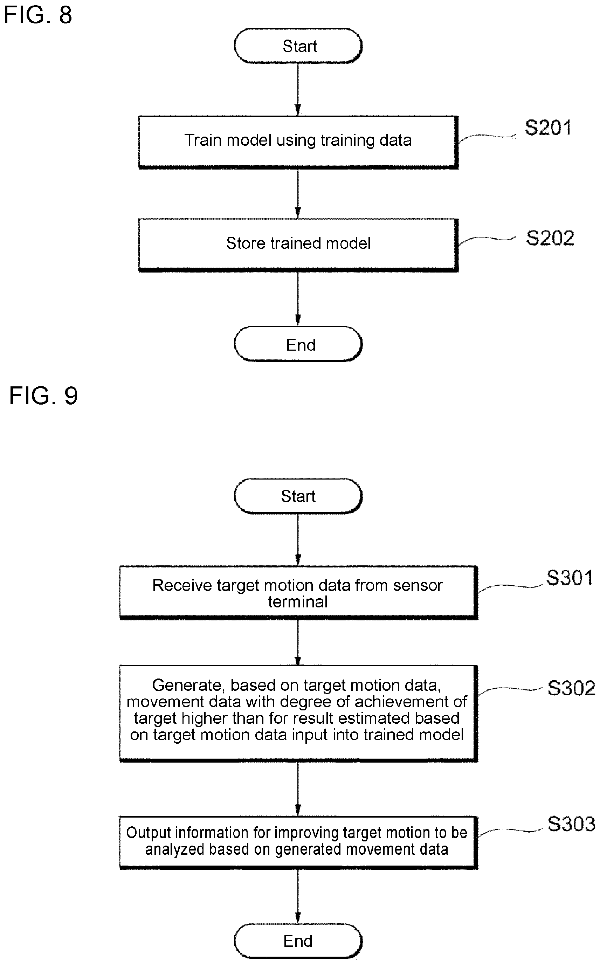

An example model training process performed by the motion improvement device 10 according to the present embodiment will be described with reference to FIG. 8.

The trainer 11 in the motion improvement device 10 first trains an AI model so as to take the motion data in the training data 19a as input and to take the result information about the training data 19a as output (step S201).

Subsequently, the storage 19 in the motion improvement device 10 stores the trained model 19b created through the training in step S201 (step S202). This ends the model training process.

An example motion improvement process performed by the motion improvement device 10 according to the present embodiment will be described with reference to FIG. 9.

The receiver 12 in the motion improvement device 10 first receives the target motion data about the target motion to be analyzed from the sensor terminal 20 (step S301).

Subsequently, the generator 13 in the motion improvement device 10 generates, based on the target motion data received in step S301, the movement data with the higher degree of achievement of the purpose than the result estimated by inputting the target motion data into the trained model 19b (step S302).

Subsequently, the output unit 14 in the motion improvement device 10 outputs, based on the movement data generated in step S302, the information for improving the target motion to be analyzed (step S303). This ends the motion improvement process.

This allows the skeletal data based on the information for improving the target motion to be analyzed to appear on the display in the sensor terminal 20.

As described above, the motion improvement device 10 according to the present embodiment generates, based on the result information estimated by inputting the target motion data into the trained model 19b, the movement data with the higher degree of achievement of the predetermined purpose than the result indicated by the result information using the target motion data as a start. The motion improvement device 10 then outputs the information for improving the target motion to be analyzed based on the generated movement data.

In other words, the motion improvement device 10 generates the movement data using the target motion data about the play performed by the user as a start to minimize the deviation from the predetermined purpose. The motion improvement device 10 can then present, to the user, the information for improving the motion of the user in the play based on the movement data.

Thus, the motion improvement device 10 according to the present embodiment can present, to the user, an improvement to a motion based on the motion of the user in the play.

Embodiments of the present invention may also be expressed in, but not limited to, the following appendixes. The embodiments of the present invention may also be modified by replacing or combining parts recited in the appendixes. Appendix 1

A motion improvement device (10), comprising:
a trained model (19b) trained so as to take time-series information about a specific motion as input and to take result information about a result caused by the motion as output;
a receiver (12) configured to receive target time-series information about a target motion;
a generator (13) configured to generate, based on the received target time-series information, movement data with a higher degree of achievement for a predetermined purpose than a result estimated by inputting the target time-series information into the trained model (19b); and
an output unit (14) configured to output information for improving the target motion based on the generated movement data.

### Appendix 2

The motion improvement device (10) according to appendix 1, wherein
the generator (13) calculates the movement data from the target time-series information based on an optimization algorithm to minimize a deviation between the predetermined purpose and the result estimated by inputting the target time-series information input into the trained model (19b).

### Appendix 3

The motion improvement device (10) according to appendix 2, wherein
the optimization algorithm is a gradient descent method.

### Appendix 4

The motion improvement device (10) according to any one of appendixes 1 to 3, wherein
the time-series information is skeletal data, and the movement data is skeletal data.

### Appendix 5

A motion improvement method executed by a processor (10a), the method comprising:
training a model so as to take time-series information about a specific motion as input and to take result information about a result caused by the motion as output so that a trained model (19b) is created;
receiving target time-series information about a target motion;
generating, based on the received target time-series information, movement data with a higher degree of achievement for a predetermined purpose than a result estimated by inputting the target time-series information into the trained model (19b); and
outputting information for improving the target motion based on the generated movement data.

### Appendix 6

A motion improvement program for causing a computer to function as:
a trained model (19b) trained so as to take time-series information about a specific motion as input and to take result information about a result caused by the motion as output;
a receiver (12) configured to receive target time-series information about a target motion;
a generator (13) configured to generate, based on the received target time-series information, movement data with a higher degree of achievement for a predetermined purpose than a result estimated by inputting the target time-series information into the trained model (19b); and
an output unit (14) configured to output information for improving the target motion based on the generated movement data.

### Appendix 7

A motion improvement system (100), comprising:
a sensor terminal (20); and
a motion improvement device (10),
wherein the sensor terminal (20) includes
   a detector configured to detect a specific motion and output time-series information about the motion, and
   a transmitter configured to transmit the output time-series information as target time-series information about a target motion, and
the motion improvement device (10) includes
   a trained model (19b) trained so as to take the time-series information as input and to take result information about a result caused by the motion as output,
   a receiver (12) configured to receive the target time-series information,
   a generator (13) configured to generate, based on the received target time-series information, movement data with a higher degree of achievement for a predetermined purpose than a result estimated by inputting the target time-series information into the trained model (19b), and
   an output unit (14) configured to output information for improving the target motion based on the generated movement data.

### REFERENCE SIGNS LIST

10 motion improvement device
10a CPU
10b RAM
10c ROM
10d communication device
10e input device
10f output device
11 trainer
12 receiver
13 generator
14 output unit
19 storage
19a training data
19b trained model
20 sensor terminal
100 motion improvement system
N communication network
A user
Ma image of user
Mb skeletal data

## Claims

1. A motion improvement device, comprising:
a trained model trained so as to take time-series information about a specific motion as input and to take result information about a result caused by the motion as output;
a receiver configured to receive target time-series information about a target motion;
a generator configured to generate, based on the received target time-series information, movement data with a higher degree of achievement for a predetermined purpose than a result estimated by inputting the target time-series information into the trained model; and
an output unit configured to output information for improving the target motion based on the generated movement data.

2. The motion improvement device according to claim 1, wherein
the generator calculates the movement data from the target time-series information based on an optimization algorithm to minimize a deviation between the predetermined purpose and the result estimated by inputting the target time-series information input into the trained model.

3. The motion improvement device according to claim 2, wherein
the optimization algorithm is a gradient descent method.

4. The motion improvement device according to any one of claims 1 to 3, wherein
the time-series information is skeletal data, and the movement data is skeletal data.

5. A motion improvement method executed by a processor, the method comprising:
training a model so as to take time-series information about a specific motion as input and to take result information about a result caused by the motion as output so that a trained model is created;
receiving target time-series information about a target motion;
generating, based on the received target time-series information, movement data with a higher degree of achievement for a predetermined purpose than a result estimated by inputting the target time-series information into the trained model; and
outputting information for improving the target motion based on the generated movement data.

6. A motion improvement program for causing a computer to function as:
a trained model trained so as to take time-series information about a specific motion as input and to take result information about a result caused by the motion as output;
a receiver configured to receive target time-series information about a target motion;
a generator configured to generate, based on the received target time-series information, movement data with a higher degree of achievement for a predetermined purpose than a result estimated by inputting the target time-series information into the trained model; and
an output unit configured to output information for improving the target motion based on the generated movement data.

7. A motion improvement system, comprising:
a sensor terminal; and
a motion improvement device,
wherein the sensor terminal includes
a detector configured to detect a specific motion and output time-series information about the motion, and
a transmitter configured to transmit the output time-series information as target time-series information about a target motion, and
the motion improvement device includes
a trained model trained so as to take the time-series information as input and to take result information about a result caused by the motion as output,
a receiver configured to receive the target time-series information,
a generator configured to generate, based on the received target time-series information, movement data with a higher degree of achievement for a predetermined purpose than a result estimated by inputting the target time-series information into the trained model, and
an output unit configured to output information for improving the target motion based on the generated movement data.
